# EUROPEAN PATENT APPLICATION

(11) **EP 4 560 272 A1**
(43) Date of publication of application: **28.05.2025**
(21) Application number: 23862871.3
(22) Date of filing: 09.08.2023
(51) Int. Cl.: G01D 11/30, F16B 2/08

(54) **FIXING JIG AND FIXING METHOD FOR FIXING SENSOR**

(30) Priority: 09.09.2022 JP 2022143363
(71) Applicant: Mitsubishi Heavy Industries, Ltd., Tokyo 100-8332 (JP)
(72) Inventor: AOYAMA, Keiko, Tokyo 100-8332 (JP); NAKAI, Masayoshi, Tokyo 100-8332 (JP); KUZE, Yoshiharu, Tokyo 100-8332 (JP); YAMAGUCHI, Takehiko, Tokyo 100-8332 (JP); YONEMURA, Hidetoshi, Tokyo 100-8332 (JP)
(74) Representative: Cabinet Beau de Loménie
(86) International application number: PCT/JP2023/029085
(87) International publication number: WO 2024/053329

(57) **Abstract**

A fixing jig for fixing a sensor to a surface of a pipe, includes: at least one buffer material; a band member attached to the pipe along the surface; and an adjustment part forming the band member into a ring shape by combining a first end portion including one end of the band member and a second end portion including another end of the band member, and configured to adjust a diameter of the ring shape. The at least one buffer material has two slits formed therein at an interval from each other, the first end portion of the band member is passed through one of the two slits from a first surface which is one surface of the at least one buffer material, the first end portion of the band member is inserted into the other of the two slits from a second surface which is another surface of the at least one buffer material, and in a state in which the first end portion and the second end portion of the band member are positioned on a side of the first surface, the at least one buffer material is attached to the band member.

## Description

### TECHNICAL FIELD

The present disclosure relates to a fixing jig and a fixing method for fixing a sensor.

This application claims the priority of Japanese Patent Application No. 2022-143363 filed on September 9, 2022, the content of which is incorporated herein by reference.

### BACKGROUND

Patent Document 1 describes bonding a high-temperature ultrasonic sensor and an inspection target part with a heat-resistant inorganic ceramic adhesive. Patent Document 2 describes attaching a heat-resistant ultrasonic sensor to an outer surface of a pipe with an inorganic high-temperature adhesive.

### Citation List

### Patent Literature

Patent Document 1: JP2003-4713A
Patent Document 2: JP5406881B

### SUMMARY

### Technical Problem

However, simply attaching the sensor with the inorganic ceramic adhesive as in Patent Documents 1 and 2 has the problem that the inorganic ceramic adhesive deteriorates due to a thermal stress applied afterward, resulting in a decrease in adhesive strength.

In view of the above, an object of at least one embodiment of the present disclosure is to provide a fixing jig and a fixing method capable of fixing a sensor for a long period of time even under a high-temperature environment.

### Solution to Problem

In order to achieve the above object, a fixing jig according to the present disclosure is a fixing jig for fixing a sensor to a surface of a pipe. The fixing jig includes: at least one buffer material; a band member attached to the pipe along the surface; and an adjustment part forming the band member into a ring shape by combining a first end portion including one end of the band member and a second end portion including another end of the band member, and configured to adjust a diameter of the ring shape. The at least one buffer material has two slits formed therein at an interval from each other, the first end portion of the band member is passed through one of the two slits from a first surface which is one surface of the at least one buffer material, the first end portion of the band member is inserted into the other of the two slits from a second surface which is another surface of the at least one buffer material, and in a state in which the first end portion and the second end portion of the band member are positioned on a side of the first surface, the at least one buffer material is attached to the band member.

### Advantageous Effects

According to a fixing jig of the present disclosure, by fixing a sensor fixed to a surface of a pipe with an adhesive to the surface by the fixing jig, a pressing force of the sensor against the pipe is also maintained. Therefore, the sensor can be fixed for a long period of time even under a high-temperature environment.

### BRIEF DESCRIPTION OF DRAWINGS

FIG. 1 is a configuration view of a fixing jig according to Embodiment 1 of the present disclosure.
FIG. 2 is a plan view of the fixing jig according to Embodiment 1 of the present disclosure.
FIG. 3 is a cross-sectional view of a state in which a sensor is fixed by the fixing jig according to Embodiment 1 of the present disclosure.
FIG. 4 is a flowchart of a fixing method according to Embodiment 1 of the present disclosure.
FIG. 5 is a plan view of a state in which the sensor is fixed to an outer surface of a pipe by the fixing jig according to Embodiment 1 of the present disclosure.
FIG. 6 is a cross-sectional view of a state in which the sensor is fixed by the fixing jig according to Embodiment 2 of the present disclosure.
FIG. 7 is a plan view of a state in which the sensor is fixed to the outer surface of the pipe by the fixing jig according to Embodiment 2 of the present disclosure.
FIG. 8 is a schematic view showing an example of a plate member in the fixing jig according to Embodiment 2 of the present disclosure.
FIG. 9 is a schematic view showing a preferred example of the plate member in the fixing jig according to Embodiment 2 of the present disclosure.
FIG. 10 is a perspective view of a state in which the sensor is fixed to the outer surface of the pipe by the fixing jig according to Embodiment 4 of the present disclosure.
FIG. 11 is a perspective view of a state in which the sensor is fixed to the outer surface of the pipe by the fixing jig according to Embodiment 5 of the present disclosure.
FIG. 12 is a cross-sectional view showing a modified example of the arrangement of two sensors fixed by the fixing jig according to Embodiment 5 of the present disclosure.

### DETAILED DESCRIPTION

Hereinafter, a fixing jig according to embodiments of the present disclosure will be described with reference to the drawings. The embodiment to be described below indicates one aspect of the present disclosure, does not intend to limit the disclosure, and can optionally be modified within a range of a technical idea of the present disclosure.

### (Embodiment 1)

### <Configuration of fixing jig according to Embodiment 1 of present disclosure>

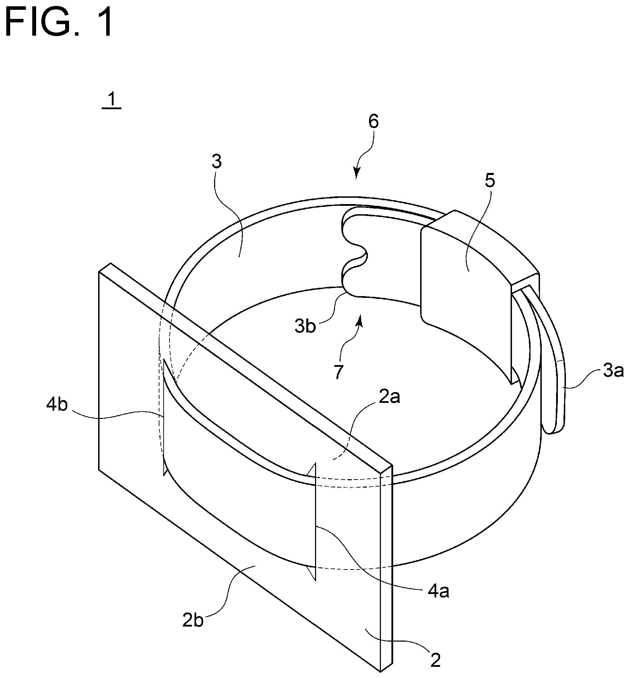

As shown in FIG. 1, a fixing jig 1 according to Embodiment 1 of the present disclosure includes a buffer material 2, a band member 3 made from metal, and an adjustment part 5 which forms the band member 3 into a ring shape by combining a first end portion 6 including one end 3a of the band member 3 and a second end portion 7 including another end 3b with each other and further is capable of adjusting a diameter of the ring shape. A material that can be used as the buffer material 2 is a material satisfying the following conditions (1) to (5). (1) A material which is deformable to some extent in a thickness direction when a force is applied, and fits a shape of a target (in the present disclosure, a sensor described later) to be pressed down. (2) A material which does not burn out at a temperature of about 500°C. (3) A material which can easily be processed. (4) A material which does not contain any components that would cause an adverse effect such as corrosion even if the material contacts an object (in the present disclosure, a pipe described later) to which the target is attached. (5) A material which is not hard enough to cause damage such as scratch to the object when the material contacts the object. As an example of the material satisfying the conditions (1) to (5), ceramic paper can be used.

The buffer material 2 preferably has a rectangular shape, and two slits 4a and 4b are formed in the buffer material 2 at intervals with respect to a longer direction of the buffer material 2. The slits 4a and 4b are preferably perpendicular to a longer direction of the band member 3 passing through the slits 4a and 4b, as described later. The first end portion 6 of the band member 3 is passed through the one slit 4a from a first surface 2a which is one surface of the buffer material 2, the first end portion 6 of the band member 3 is inserted into the another slit 4b from a second surface 2b which is another surface of the buffer material 2, and in a state in which the first end portion of the band member and the second end portion 7 of the band member 3 are positioned on a first surface 2a side, the buffer material 2 is attached to the band member 3. Note that the one end 3a and the another end 3b are distinguished for convenience only and do not specify which of two ends of the band member 3 is the end 3a or 3b.

The configuration of the adjustment part 5 is not particularly limited, and for example, a clamp (SLS-1N) commercially available from IWABUCHI CORPORATION can be used as the adjustment part 5. As the band member 3, for example, a stainless belt SUS430 commercially available from MonotaRO Co.,Ltd. can be used. Further, as the band member 3 provided with the adjustment part 5, for example, a hose band (HOSBS200N) commercially available from MISUMI Group Inc. can be used.

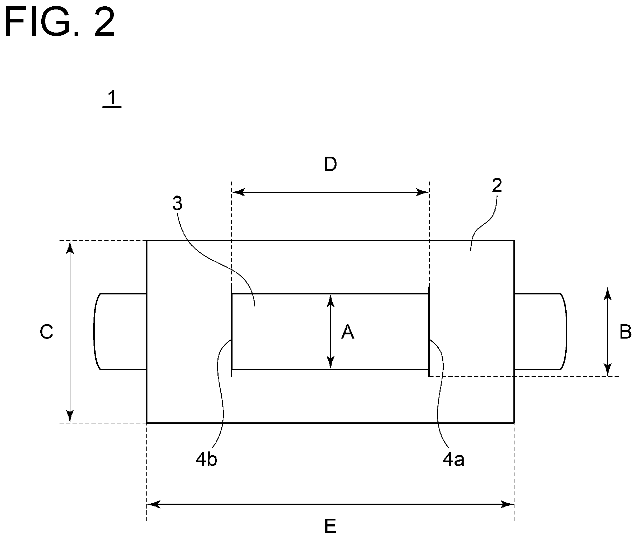

As shown in FIG. 2, a width of the band member 3 (see FIG. 1) is A (mm), a length of each of the slits 4a and 4b is B (mm), a width of the buffer material 2 in a shorter direction is C (mm), an interval between the slits 4a and 4b is D (mm), and a width of the buffer material 2 in the longer direction is E (mm). A is preferably about +5 mm relative to the width of the target (sensor) to be pressed down. Under this condition, it is possible to provide a margin in the width of the band member 3, assuming that the center of the band member 3 and the center of the target are not aligned when the target is pressed down with the fixing jig 1.

B is preferably about 2 mm greater than A (B=A+2). When the band member 3 is inserted into each of the slits 4a and 4b, since the width of the slit 4a, 4b is slightly greater than the width of the band member 3, it is easier to insert, whereas misalignment of the band member 3 relative to the buffer material 2 in the shorter direction of the buffer material 2 can be suppressed as much as possible.

C is preferably greater than A by not less than 15 mm (C≥A+15). Under this condition, the risk of the slits 4a and 4b propagating in the shorter direction of the buffer material 2 and causing the buffer material 2 to tear can be avoided as much as possible. D is preferably at least twice A (D≥2×A). This condition was determined through an experiment by the inventors of the present disclosure as a preferable condition for applying a pressing force to the target. E is preferably greater than A by not less than 50 mm (E≥A+50). Under this condition, the risk of the slits 4a and 4b propagating in the longer direction of the buffer material 2 and causing the buffer material 2 to tear can be avoided as much as possible.

### <Usage of fixing jig according to Embodiment 1 of present disclosure>

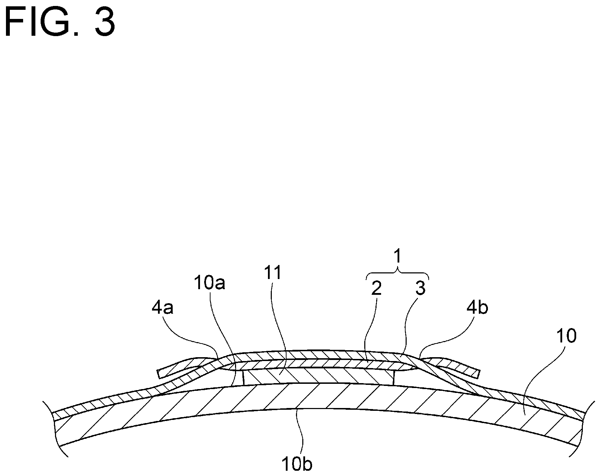

Next, as an example of usage of the fixing jig according to Embodiment 1 of the present disclosure, a method for fixing the sensor to an outer surface of the pipe by the fixing jig 1 will be described. FIG. 3 shows a state in which a thin-film sensor 11 is fixed onto an outer surface 10a of the pipe 10 by the fixing jig 1. The sensor 11 is bonded to the outer surface 10a with an adhesive, and in a state in which the whole of the sensor 11 is covered with the buffer material 2, the ring-shaped band member 3 is fixed to the pipe 10 such that the band member 3 tightens the pipe 10. Since the ring-shaped band member 3 tightens the pipe 10, the band member 3 presses the sensor 11 toward the outer surface 10a via the buffer material 2. As described above, by making the width of the band member 3 about 5 mm greater than the width of the sensor 11, the band member 3 can reliably apply the pressing force to the sensor 11. The adhesive used to bond the sensor 11 to the outer surface 10a is not limited to an inorganic ceramic adhesive, but an epoxy adhesive can also be used.

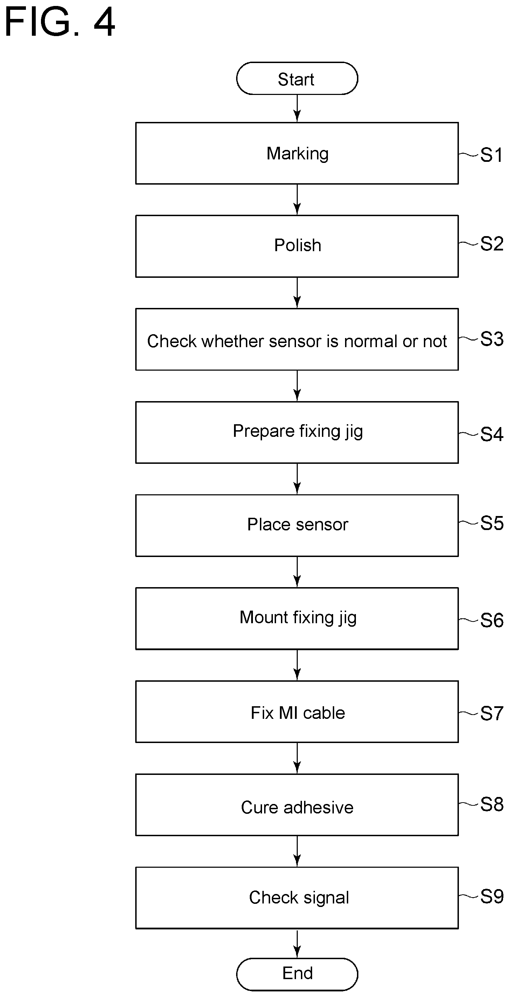

The fixing method for fixing the sensor 11 onto the outer surface 10a of the pipe 10 by using the fixing jig 1 will be described with reference to a flowchart of FIG. 4. First, a fixing position of the sensor 11 is marked on the outer surface 10a of the pipe 10 with chalk, a marker, etc. (step S1). If the surface of the pipe 10 is coated and a metal surface is not exposed, the fixing position of the sensor 11 on the outer surface 10a is polished using a grinder, Scotch-Brite (trademark), sandpaper, etc. to remove coating, black film (oxide film), scale, etc. (Step S2). If the pipe 10 is not coated, step S2 can be omitted. However, even if the pipe 10 is not coated, step S2 may be performed for the purpose of smoothing out irregularities or increasing surface roughness to improve bonding properties of the adhesive. After applying a very small amount of a contact medium such as water to the fixing position of the sensor 11 on the outer surface 10a, the activated sensor 11 is pressed against the outer surface 10a while covering it with a rag, etc. from above, it is detected whether a reflected signal of a signal emitted from the sensor 11 on an inner surface 10b of the pipe 10 is returned, and it is checked whether there is anything abnormal with the sensor 11 (step S3).

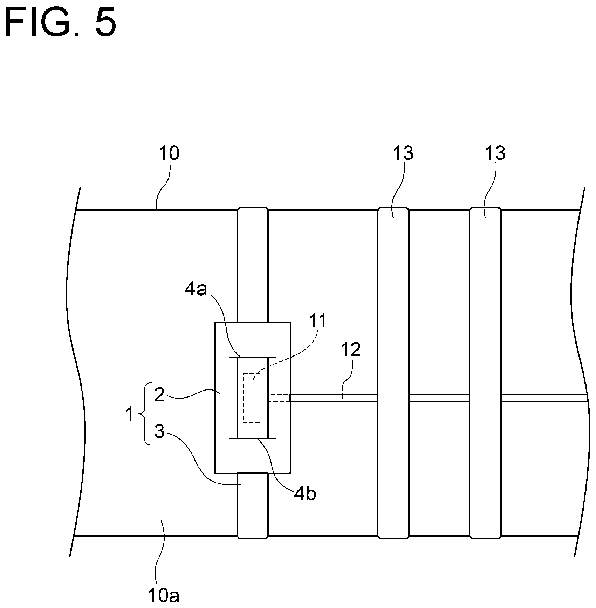

The fixing jig 1 is prepared (step S4). In Embodiment 1, the fixing jig 1 is prepared as step S4, but step S4 may be performed at any timing from before step S1 to after step S2. The adhesive is applied to the fixing position of the sensor 11 on the outer surface 10a, and the sensor 11 is placed on the applied adhesive (step S5). Then, the fixing jig 1 is mounted so as to be in the state shown in FIG. 3 (Step S6), and the pressing force is applied to the sensor 11 by the fixing jig 1. The pressing force is adjusted by adjusting the diameter of the ring-shaped band member 3 with the adjustment part 5. As shown in FIG. 5, a cable for transmitting a signal, such as an MI cable 12, is connected to the sensor 11. If the MI cable 12 is floating from the outer surface 10a, the sensor 11 easily comes free from the outer surface 10a during measurement by the sensor 11. Therefore, the MI cable 12 extending from the sensor 11 is fixed to the outer surface 10a (step S7). The MI cable 12 can be fixed, for example, by preparing band members 13 having the same configuration as the band member 3 forming the fixing jig 1, and attaching the band members 13 to the pipe 10 so that the MI cable 12 is interposed between at least one band member 13 and the outer surface 10a.

Next, the adhesive is cured using a dryer, a heat gun, or the like (step S8). At this time, a tip of a thermocouple is inserted under the buffer material 2 to monitor a temperature of the sensor 11. If warm air from the dryer, the heat gun, or the like is applied directly to the buffer material 2, it is impossible to accurately measure a temperature of the pipe near an attachment portion of the sensor 11. Therefore, it is preferable to apply the warm air to the band member 3 appearing between the slits 4a and 4b of the buffer material 2. Finally, it is checked whether signal intensity is maintained at a level that allows the reflected signal of the signal emitted from the sensor 11 on the inner surface 10b of the pipe 10 to clearly be recognized (step S9). With steps S1 to S9, the sensor 11 is fixed onto the outer surface 10a of the pipe 10 by the fixing jig 1.

As described above, by fixing the sensor 11 fixed to the outer surface 10a of the pipe 10 with the adhesive to the outer surface 10a by using the fixing jig 1, the pressing force of the sensor 11 against the pipe 10 is also maintained. Therefore, the sensor 11 can be fixed for a long period of time even under a high-temperature environment.

### (Embodiment 2)

Next, the fixing jig according to Embodiment 2 will be described. The fixing jig according to Embodiment 2 is a metal plate-like member added between the buffer material 2 and the band member 3, in contrast to Embodiment 1. In Embodiment 2, the same constituent elements as those in Embodiment 1 are associated with the same reference signs and not described again in detail.

### <Configuration of fixing jig according to Embodiment 2 of present disclosure>

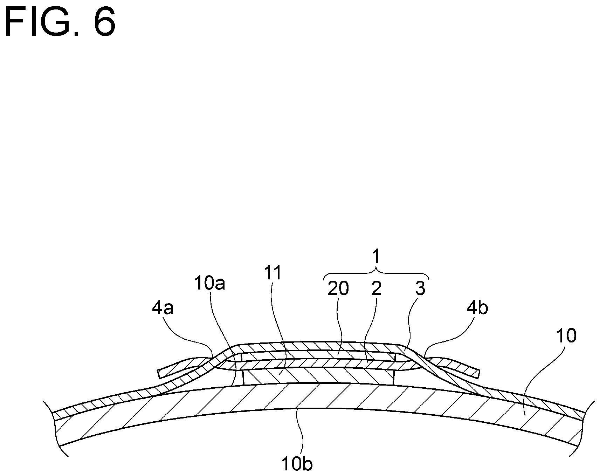

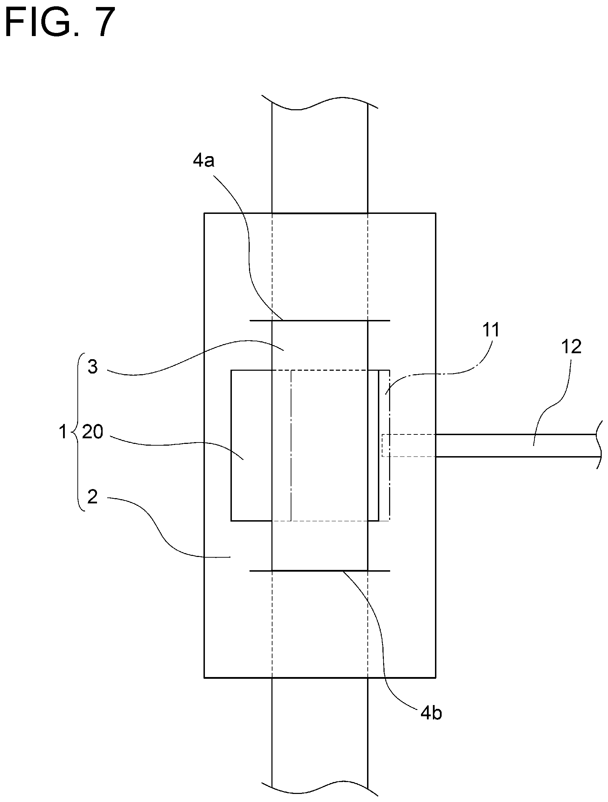

As shown in FIG. 6, the fixing jig 1 according to Embodiment 2 of the present disclosure further includes a plate member 20 made from metal (for example, but not limited to SUS), which is disposed so as to be interposed between the buffer material 2 and the band member 3 between the slits 4a and 4b. As shown in FIG. 7, the plate member 20 overlaps the sensor 11 via the buffer material 2, but a partial region of the sensor 11 protrudes beyond the plate member 20. Whereby, a pressing force by the plate member 20 exerts a shearing force on a connection between the sensor 11 and the MI cable 12, making it possible to prevent disconnection. Other configurations are the same as in Embodiment 1.

### <Operation effect by using fixing jig according to Embodiment 2 of present disclosure>

When the pipe 10 is a large-diameter pipe having an outer diameter of not less than 100 mm, the fixing jig 1 of Embodiment 1, which consists only of the buffer material 2 and the band member 3, is significantly affected by a surface condition of the pipe, for example, deformation due to unevenness caused by welding, coating, etc., compared to a small-diameter pipe having an outer diameter of not greater than 100 mm. Therefore, a pressing force pressing the sensor 11 along a direction perpendicular to the outer surface 10a of the pipe 10 generally decreases. In contrast, if the fixing jig 1 according to Embodiment 2 described above is used, since the pressing force by the band member 3 is applied to the sensor 11 via the plate member 20, the pressing force pressing the sensor 11 along the direction perpendicular to the outer surface 10a is sufficiently applied even when the sensor 11 is installed in the large-diameter pipe. Therefore, the sensor 11 can be fixed for a long period of time even under the high-temperature environment.

### <Preferred form of plate member of fixing jig according to Embodiment 2 of present disclosure>

Since the plate member 20 presses the whole (excluding an insulator portion 14) of the sensor 11, it is preferable that dimensions of length and width of the plate member 20 are 0 to 2 mm greater than dimensions of length and width of the sensor 11. Further, since the band member 3 fixes the sensor 11 for a long period of time, there is a risk of damage due to occurrence of kink, etc. Therefore, in order to prevent the occurrence of kink, etc., it is preferable to chamfer the plate member 20.

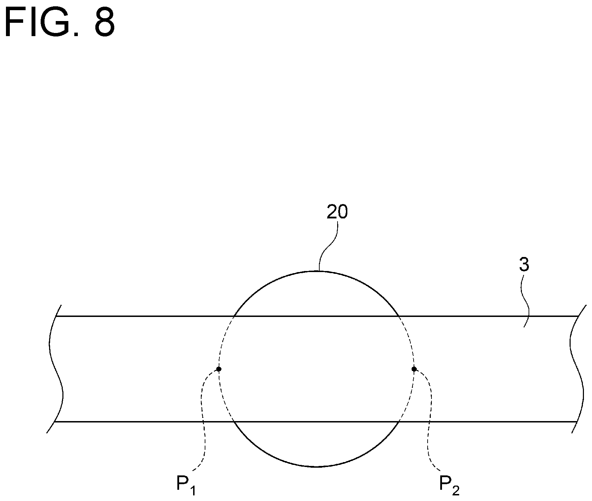

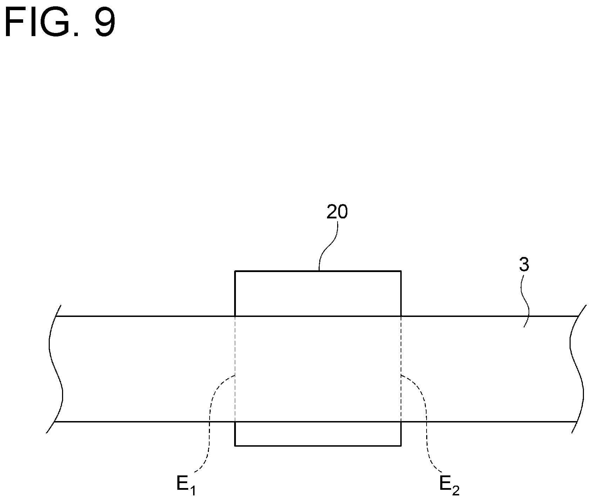

The plate member 20 preferably has a rectangular shape rather than a circular shape. When the plate member 20 is circular as shown in FIG. 8, the pressing force from the band member 3 is received at two points P₁ and P₂ on the periphery, and the sensor 11 cannot be pressed stably. In contrast, when the plate member 20 is rectangular as shown in FIG. 9, the pressing force from the band member 3 is received at two sides E₁ and E₂ of the rectangle, and the sensor 11 can be pressed stably.

The plate member 20 preferably has a curved shape so as to protrude toward the band member 3, in a state in which the plate member 20 is disposed between the band member 3 and the buffer material 2. The radius of curvature of this curve is equal to the outer diameter of the pipe 10. According to such configuration, an area of the plate member 20, which can apply the pressing force to the sensor 11, increases, allowing the sensor 11 to stably be fixed even to the large-diameter pipe. However, according to the studies of the inventors of the present disclosure, this effect exists when the outer diameter of the pipe 10 is in the range of 100 to 300 mm, and for the pipe 10 having the outer diameter of not less than 300 mm, there was no significant difference in the pressing force on the sensor 11 whether the curved plate member 20 or the flat plate member 20 was used. Therefore, the flat plate member 20 may be used for the pipe 10 having the outer diameter of not less than 300 mm.

### (Embodiment 3)

Next, the fixing jig according to Embodiment 3 will be described. The fixing jig according to Embodiment 3 limits respective materials of the pipe 10 and the band member 3, in contrast to Embodiment 1 or 2. In the following description, an embodiment obtained by adding such limitation to Embodiment 1 is referred to as Embodiment 3, but an embodiment obtained by adding such limitation to Embodiment 2 may be referred to as Embodiment 3. In Embodiment 3, the same constituent elements as those in Embodiment 1 are associated with the same reference signs and not described again in detail.

As also described in Embodiment 2, when the sensor 11 is fixed to the large-diameter pipe, it is difficult to fix the sensor 11 with the fixing jig 1 of Embodiment 1, which consists only of the buffer material 2 and the band member 3. If there is a large difference in linear expansion coefficient between the material forming the pipe 10 and the material forming the band member 3, the band member 3 may loosen when the temperatures of the pipe 10 and the band member 3 rise. Therefore, in Embodiment 3, in contrast to Embodiment 1, a difference in linear expansion coefficient between a material forming the band member 3 and the material forming the pipe 10 is not greater than 1.0×10⁻⁶/°C.

For example, when the pipe 10 is formed from carbon steel having a linear expansion coefficient of 10.8×10⁻⁶/°C, the band member 3 is preferably formed from SUS430 having a linear expansion coefficient of 10.4×10⁻⁶/°C. Further, when the pipe 10 is formed from SUS304 or SUS316L having a linear expansion coefficient of 16.5×10⁻⁶ to 17.3×10⁻⁶/°C, the band member 3 is preferably formed from SUS304 having a linear expansion coefficient of 17.3×10⁻⁶/°C. These two examples do not limit the configuration of Embodiment 3 but are merely illustrative, and do not limit the material for the band member 3 to the SUS material. For example, the band member 3 may be formed with Inconel which does not deteriorate in a high-temperature state of about 500°C.

By thus reducing the difference in linear expansion coefficient between the material for the pipe 10 and the material for the band member 3, the risk of loosening the band member 3 can be reduced even if the temperatures of the pipe 10 and the band member 3 rise.

### (Embodiment 4)

Next, the fixing jig according to Embodiment 4 will be described. The fixing jig according to Embodiment 4 is configured to fix a plurality of sensors 11 along the circumferential direction of the pipe 10, in contrast to any of Embodiments 1 to 3. In the following description, an embodiment obtained by making such modification to Embodiment 1 is referred to as Embodiment 4, but an embodiment obtained by making such modification to Embodiment 2 or 3 may be referred to as Embodiment 4. In Embodiment 4, the same constituent elements as those in Embodiment 1 are associated with the same reference signs and not described again in detail.

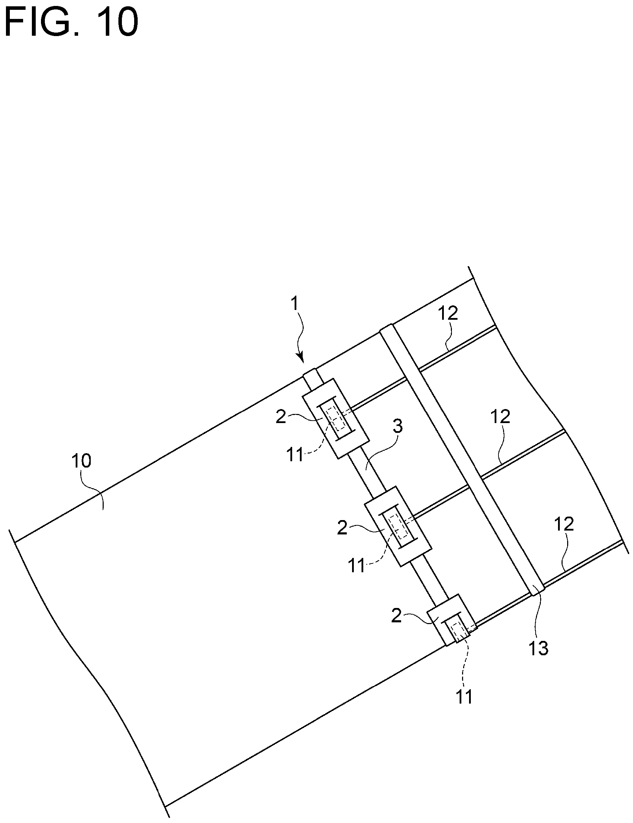

As shown in FIG. 10, in the fixing jig 1 according to Embodiment 4 of the present disclosure, a plurality of buffer materials 2 are attached to the band member 3 at intervals from each other. The form in which each buffer material 2 is attached to the band member 3 is the same as the form described in Embodiment 1. Other configurations are the same as in Embodiment 1. By using such fixing jig 1, the plurality of sensors 11 disposed along the circumferential direction of the pipe 10 can be fixed.

The interval between the sensors 11 adjacent to each other in the circumferential direction of the pipe 10 is preferably at least 200 mm in order to avoid interference between adjacent buffer materials 2, 2 or interference of work during mounting of the fixing jig 1. Further, when the MI cable 12 with poor flexibility is used as a cable connected to the sensor 11, the MI cable 12 is preferably fixed to the pipe 10 in advance before the sensor 11 is fixed by the fixing jig 1. The MI cable 12 may be fixed to the pipe 10 by the method exemplified in Embodiment 1, or by another method.

### (Embodiment 5)

Next, the fixing jig according to Embodiment 5 will be described. The fixing jig according to Embodiment 5 is configured to fix the plurality of sensors 11 along the axial direction of the pipe 10, in contrast to any of Embodiments 1 to 3. In the following description, an embodiment obtained by making such modification to Embodiment 1 is referred to as Embodiment 5, but an embodiment obtained by making such modification to Embodiment 2 or 3 may be referred to as Embodiment 5. In Embodiment 5, the same constituent elements as those in Embodiment 1 are associated with the same reference signs and not described again in detail.

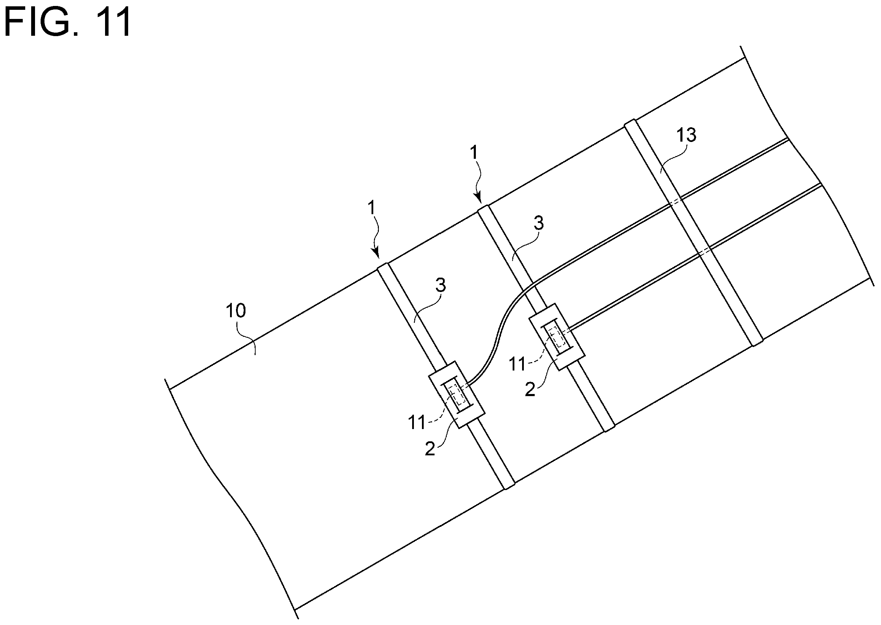

As shown in FIG. 11, when the plurality of sensors 11 are fixed along the axial direction of the pipe 10, a plurality of fixing jigs 1 according to Embodiment 1 are used. The adjacent fixing jigs 1 are mounted at intervals from each other so that the buffer materials 2 of the fixing jigs 1 are aligned along the axial direction of the pipe 10.

When the respective MI cables 12 extend from the respective sensors 11 in the same direction, it is necessary to bend the MI cable 12 in order to avoid interference with the buffer material 2 covering the other sensor 11. However, since the MI cable 12 has poor flexibility, the MI cable 12 may break if the MI cable 12 is bent greatly. Therefore, in order to avoid interference between the MI cables 12 and the buffer materials 2 with a small bend, the interval between the adjacent sensors 11, 11 is preferably at least 200 mm. The MI cables 12 are fixed to the pipe 10 in the same manner as Embodiment 4.

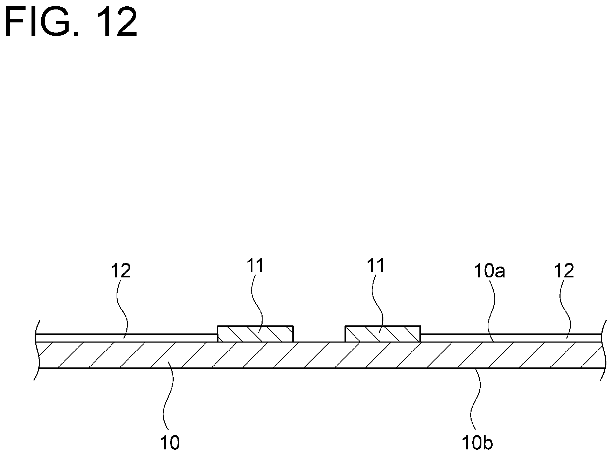

As shown in FIG. 12, when two sensors 11, 11 are fixed along the axial direction of the pipe 10, by extending the MI cables 12 from the respective sensors 11 in opposite directions, the interval between the adjacent sensors 11, 11 can be made shorter than 200 mm, for example, the adjacent sensors 11, 11 can be brought close to each other by about 40 mm.

The contents described in the above embodiments would be understood as follows, for instance.
[1] A fixing jig according to one aspect is a fixing jig (1) for fixing a sensor (11) to a surface (outer surface 10a) of a pipe (10). The fixing jig (1) includes: at least one buffer material (2); a band member (3) attached to the pipe (10) along the surface (10a); and an adjustment part (5) forming the band member (3) into a ring shape by combining a first end portion (6) including one end (3a) of the band member (3) and a second end portion (7) including another end (3b) of the band member (3), and configured to adjust a diameter of the ring shape. The at least one buffer material (2) has two slits (4a, 4b) formed therein at an interval from each other, the first end portion (6) of the band member (3) is passed through one (4a) of the two slits from a first surface (2a) which is one surface of the at least one buffer material (2), the first end portion (6) of the band member (3) is inserted into the other (4b) of the two slits from a second surface (2b) which is another surface of the at least one buffer material (2), and in a state in which the first end portion (6) and the second end portion (7) of the band member (3) are positioned on a side of the first surface (2a), the at least one buffer material (2) is attached to the band member (3).
   According to the fixing jig of the present disclosure, by fixing the sensor fixed to the surface of the pipe with the adhesive to the surface by using the fixing jig, the pressing force of the sensor against the pipe is also maintained. Therefore, the sensor can be fixed for a long period of time even under a high-temperature environment.
[2] A fixing jig according to another aspect is the fixing jig of [1], wherein a plate member (20) made from metal is disposed between the band member (3) and the second surface (2b) of the at least one buffer material (2).
   As the outer diameter of the pipe increases, the force decreases with which the band member presses the sensor along the direction perpendicular to the outer surface of the pipe. In contrast, according to the above configuration [2], since the pressing force along the direction perpendicular to the surface of the pipe is applied to the sensor by the plate member, the sensor can be fixed even to the pipe with the large outer diameter.
[3] A fixing jig according to still another aspect is the fixing jig of [2], wherein the plate member (20) is rectangular.
   According to such configuration, the pressing force can be applied to the sensor by at least two sides of the rectangular plate member, allowing the sensor to stably be fixed even to the large-diameter pipe.
[4] A fixing jig according to yet another aspect is the fixing jig of [2] or [3], wherein the plate member (20) has a shape curved so as to protrude toward the band member (3).
   According to such configuration, an area of the plate member, which can apply the pressing force to the sensor, increases, allowing the sensor to stably be fixed even to the large-diameter pipe.
[5] A fixing jig according to yet another aspect is the fixing jig of any of [1] to [4], wherein a difference in linear expansion coefficient between a material forming the band member (3) and a material forming the pipe (10) is not greater than 1.0×10⁻⁶/°C.
   As the outer diameter of the pipe increases, the band member may loosen during heating due to the difference in linear expansion coefficient between the material for the pipe and the material for the band member. In contrast, according to the above configuration [5], since the difference in linear expansion coefficient between the material for the pipe and the material for the band member is small, the risk of loosening the band member can be reduced even if the temperatures of the pipe and the band member rise.
[6] A fixing jig according to yet another aspect is the fixing jig of any of [1] to [5], wherein the buffer material (2) is ceramic paper.
   According to such configuration, it is possible to improve installation workability of the fixing jig.
[7] A fixing method according to one aspect is a fixing method for fixing at least one sensor (11) to a surface (outer surface 10a) of a pipe (10), including: a step of preparing the fixing jig (1) of any of [1] to [6]; a step of applying an adhesive to a position on the surface (10a), to which the at least one sensor (11) is fixed, and placing the at least one sensor (11) on the applied adhesive; a step of pressing the at least one sensor (11) toward the surface (10a) by the fixing jig (1); and a step of curing the adhesive.
   According to the fixing method of the present disclosure, since the sensor fixed to the outer surface of the pipe with the adhesive can be pressed against the outer surface by the fixing jig, the sensor can be fixed for a long period of time even under a high-temperature environment.
[8] A fixing method according to another aspect is the fixing method of [7], wherein the at least one sensor (11) includes a plurality of sensors, and wherein the fixing method includes a step of fixing cables (MI cables 12) respectively connected to the plurality of sensors to the surface (10a).
   According to such method, when the MI cables with poor flexibility are used as the cables, the workability of fixing the sensors can be improved by fixing the cables to the outer surface.
[9] A fixing method according to still another aspect is the fixing method of [8], wherein the plurality of sensors (11) are disposed along an axial direction of the pipe (10), and the cables (12) respectively connected to sensors (11, 11) adjacent to each other in the axial direction are disposed so as to respectively extend from the sensors (11, 11) adjacent to each other in the axial direction in opposite directions in the axial direction.

According to such method, the interval between the adjacent sensors can be made shorter than 200 mm, for example, the adjacent sensors can be brought close to each other by about 40 mm.

### Reference Signs List

- 1: Fixing jig
- 2: Buffer material
- 2a: First surface (of buffer material)
- 2b: Second surface (of buffer material)
- 3: Band member
- 3a: End (of band member)
- 3b: End (of band member)
- 4a: Slit
- 4b: Slit
- 5: Adjustment part
- 6: First end portion
- 7: Second end portion
- 10: Pipe
- 10a: Outer surface (of pipe)
- 11: Sensor
- 12: MI cable (cable)
- 20: Plate member

## Claims

1. A fixing jig for fixing a sensor to a surface of a pipe,
wherein the fixing jig comprises:
at least one buffer material;
a band member attached to the pipe along the surface; and
an adjustment part forming the band member into a ring shape by combining a first end portion including one end of the band member and a second end portion including another end of the band member, and configured to adjust a diameter of the ring shape, and
wherein the at least one buffer material has two slits formed therein at an interval from each other, the first end portion of the band member is passed through one of the two slits from a first surface which is one surface of the at least one buffer material, the first end portion of the band member is inserted into the other of the two slits from a second surface which is another surface of the at least one buffer material, and in a state in which the first end portion and the second end portion of the band member are positioned on a side of the first surface, the at least one buffer material is attached to the band member.

2. The fixing jig according to claim 1,
wherein a plate member made from metal is disposed between the band member and the second surface of the at least one buffer material.

3. The fixing jig according to claim 2,
wherein the plate member is rectangular.

4. The fixing jig according to claim 2 or 3,
wherein the plate member has a shape curved so as to protrude toward the band member.

5. The fixing jig according to any one of claims 1 to 3,
wherein a difference in linear expansion coefficient between a material forming the band member and a material forming the pipe is not greater than 1.0×10⁻⁶/°C.

6. The fixing jig according to any one of claims 1 to 3,
wherein the buffer material is ceramic paper.

7. A fixing method for fixing at least one sensor to a surface of a pipe, comprising:
a step of preparing the fixing jig according to any one of claims 1 to 3;
a step of applying an adhesive to a position on the surface, to which the at least one sensor is fixed, and placing the at least one sensor on the applied adhesive;
a step of pressing the at least one sensor toward the surface by the fixing jig; and
a step of curing the adhesive.

8. The fixing method according to claim 7,
wherein the at least one sensor includes a plurality of sensors, and
wherein the fixing method comprises a step of fixing cables respectively connected to the plurality of sensors to the surface.

9. The fixing method according to claim 8,
wherein the plurality of sensors are disposed along an axial direction of the pipe, and the cables respectively connected to sensors adjacent to each other in the axial direction are disposed so as to respectively extend from the sensors adjacent to each other in the axial direction in opposite directions in the axial direction.
